# EUROPÄISCHE PATENTSCHRIFT

(11) **EP 1 560 647 B1**
(45) Veröffentlichungstag und Bekanntmachung des Hinweises auf die Patenterteilung: **05.01.2011**
(21) Anmeldenummer: 03767508.9
(22) Anmeldetag: 15.10.2003
(51) Int. Cl.: B01J 23/06, B01J 38/00, C07C 7/167

(54) **VERFAHREN ZUR REGENERIERUNG EINES HYDRIERKATALYSATORS**
METHOD FOR REGENERATING A HYDROGENATION CATALYST
PROCEDE POUR REGENERER UN CATALYSEUR D'HYDROGENATION

(30) Priorität: 23.10.2002 DE 10249368
(43) Veröffentlichungstag der Anmeldung: 10.08.2005
(73) Patentinhaber: BASF SE, 67056 Ludwigshafen (DE)
(72) Erfinder: HILL, Thomas, 67071 Ludwigshafen (DE); HAAKE, Mathias, 68161 Mannheim (DE); DIALER, Harald, 68161 Mannheim (DE)
(74) Vertreter: Kern, Hedwig
(86) Internationale Anmeldenummer: PCT/EP2003/011410
(87) Internationale Veröffentlichungsnummer: WO 2004/037409

(56) Entgegenhaltungen:
- EP-A- 0 550 150
- WO-A-94/00232
- DE-A- 19 959 064
- US-A- 5 817 589

## Beschreibung

Die Erfindung betrifft ein Verfahren zur Regenerierung eines Hydrierkatalysators.

Hydrierkatalysatoren werden in einer Vielzahl von chemischen Reaktionen eingesetzt. Sie enthalten in der Regel als Aktivkomponenten Elemente der VIII. Gruppe des Periodensystems, wie Eisen, Kobalt, Nickel, Ruthenium, Rhodium, Palladium, Platin und Iridium. Zusätzlich können Promotoren enthalten sein, unter anderem Kupfer, Silber, Gold, Zink, Zinn, Wismut oder Stibium.

Hydrierkatalysatoren werden häufig in geträgerter Form eingesetzt, wobei die Aktivkomponente auf einem Träger aufgebracht ist. Als Trägermaterial werden häufig Metalle, oxidische Materialien, wie Aluminiumoxid oder Siliziumdioxid, Kohlefasern oder Kunststoffe eingesetzt.

Als Folge von Nebenreaktionen bilden sich in den Hydrierreaktoren aus den Reaktanden Oligomere und Polymere, sogenanntes Grünöl, das zu kohlenstoffhaltigen Ablagerungen auf dem Hydrierkatalysator führt. Dadurch werden Poren verstopft, Aktivzentren werden unzugänglich, die Aktivität des Katalysators sinkt und eine Regenerierung desselben wird erforderlich. Nach der klassischen Regeneriermethode werden die kohlenstoffhaltigen Ablagerungen oxidativ, häufig durch Überleiten von Luft bei hohen Temperaturen, von etwa 400 bis 500°C, verbrannt. Um lokale Überhitzungen zu vermeiden wird häufig Wasserdampf zugesetzt. Nachteilig an dieser klassischen Regeneration ist, dass die Aktivität des regenerierten Katalysators in der Regel niedriger ist als die des frischen Katalysators.

Aus WO 94/00232 ist bekannt, dass ein Katalysator, der zuvor zur Entfernung von acetylenischen Verunreinigungen aus einem Olefinstrom eingesetzt worden war, nahezu vollständig durch Strippen mit einem Wasserstoffstrom mit einer Lineargeschwindigkeit von mindestens 15,2 cm/Sekunde bei einer Temperatur zwischen 315 und 400°C, ohne oxidative Behandlung, regeneriert werden kann.

Die EP-A 0 550 150 beschreibt die Regenerierung eines Hydroisomerisierungskatalysators, der für wachsartige Ausgangsstoffe eingesetzt worden war. Der Hydroisomerisierungskatalysator ist ein geträgerter Katalysator, wobei der Träger aus halogenierten hochtemperaturbeständigen Oxiden gebildet ist, insbesondere aus fluoriertem γ-Aluminiumoxid.

Die US-A 5,817,589 beschreibt die Regenerierung eines Hydrierkatalysator, der zuvor zur Hydrierung von Diolefinen und Nitrilen aus einem C5-Naphtaschnitt mit einer typischen Zusammensetzung, d.h. mit Kohlenwasserstoffen mit überwiegend fünf Kohlenstoffatomen pro Molekül eingesetzt worden war. Ein derartiger Kohlenwasserstoffstrom ist jedoch unter den Hydrierbedingungen (typischerweise 60 bis 160°C und 200 bis 400 psig, d.h. ca. 14 bis 28 bar, flüssig. Hierbei handelt es sich somit um eine Flüssigphasenhydrierung. Der geträgerte Katalysator ist aus einem anorganischen, nicht metallischen Trägermaterial gebildet, und zwar aus einem anorganischen Oxid-Zeolith Composite, Kohlenstoff und Zeolith.

Die WO-A 94/00232 beschreibt ein Regenerierungsverfahren für einen Katalysator zur Gasphasenselektivhydrierung von Acetylen, das Strippen mit einem Gemisch aus Wasserstoff und Stickstoff bei erhöhten Temperaturen (315°C- 400°C) vorsieht.

In WO 02/00341 ist ein Regenerierverfahren für Hydrierkatalysatoren durch Überleiten eines wasserstoffhaltigen Gasstromes bei einer Temperatur zwischen 200 und 1000°C, ohne Verbrennung mit einem sauerstoffhaltigen Gas beschrieben.

Aus GB-B 907,348 ist ein Verfahren zur Reaktivierung eines auf einem inerten Träger aufgebrachten Nickelkatalysators bekannt, der zur Selektivhydrierung von Benzin eingesetzt worden war, wonach der Katalysator in situ oder ex situ mit einem Wasserstoff enthaltenden Gas bei einer Temperatur von 150°C, zwischen einer und 24 Stunden lang behandelt wird.

Es war demgegenüber die Aufgabe der Erfindung, ein Verfahren zur Regenerierung eines Hydrierkatalysators zur Verfügung zu stellen, der in einer Gasphasenhydrierung eingesetzt worden war, wonach die ursprüngliche Aktivität des frischen Hydrierkatalysators weitgehend wieder erreicht wird.

Die Aufgabe wird durch ein Verfahren zur Regenerierung eines Hydrierkatalysators, der als Dünnschichtkatalysator vorliegt, gebildet aus einer Aktivmasse umfassend ein oder mehrere hydrieraktive Metalle, die auf einem nicht porösen, metallischen Träger aufgebracht ist und der in einer Gasphasen-Selektivhydrierung von Acetylen aus einem C₂-Schnitt oder von Propin und/oder Propadien aus einem C₃-Schnitt eingesetzt worden war, gelöst, durch Strippen mit einer Substanz oder einem Substanzgemisch, das unter Verfahrensbedingungen keine oxidierende Wirkung hat und in gasförmigem Aggregatzustand vorliegt, bei einer Temperatur im Bereich von 50 bis 300°C.

Durch das erfindungsgemäße Strippen wird somit eine Substanz oder ein Substanzgemisch, das bei der Verfahrenstemperatur im Bereich von 50 bis 300°C gasförmig ist, über den gebrauchten Hydrierkatalysator geleitet. Dabei werden die leichter flüchtigen Anteile des Grünöls gasförmig ausgetragen, schwerer flüchtige Anteile des Grünöls, die während der Betriebsdauer den Hydrierkatalysator belegt und dadurch desaktiviert hatten, werden aufgeschmolzen und fließen ab.

Erfindungswesentlich ist, dass ein Strippgas gewählt wird, das unter Verfahrensbedingungen keine oxidierende Wirkung hat.

Es wurde überraschend gefunden, dass bei der Regenerierung nach dem erfindungsgemäßen Verfahren die ursprüngliche Aktivität des frischen Katalysators nahezu wieder erreicht werden kann, obwohl die Oberfläche des Hydrierkatalysators nach dem Reinigungsverfahren noch weitgehend mit Kohlenstoff belegt war.

Durch das erfindungsgemäße Verfahren wird ein Hydrierkatalysator regeneriert, der zuvor in der Selektivhydrierung eines C₂- und/oder C₃-Schnittes eingesetzt worden war. Hierbei kann es sich gleichermaßen um eine front-end- oder eine tail-end-Hydrierung handeln. Ein derartiges Verfahren und ein hierfür besonders geeigneter Katalysator ist aus der DE-A 19959064 bekannt, deren Offenbarungsgehalt hiermit voll umfänglich in die vorliegende Patentanmeldung einbezogen wird.

Als Strippgas kann grundsätzlich jede Substanz oder jedes Substanzgemisch eingesetzt werden, sofern keine oxidierende Wirkung auf den Hydrierkatalysator ausgeübt wird. Die Substanz oder das Substanzgemisch kann man bevorzugt aus der nachfolgenden Aufzählung auswählen: Wasserstoff, Stickstoff, Argon, Kohlenwasserstoffe, bevorzugt gesättigte Kohlenwasserstoffe, besonders bevorzugt Methan.

Besonders vorteilhaft ist Stickstoff, insbesondere aufgrund seiner Verfügbarkeit, seines Preises sowie seiner Wärmekapazität oder ein Gemisch aus Stickstoff und Wasserstoff.

Vorteilhaft führt man das Strippen bei einer Temperatur im Bereich von 70 bis 150°C, insbesondere bei einer Temperatur von 100 bis 150°C, durch.

Die Strippdauer liegt bevorzugt bei 30 min bis mehreren Tagen, besonders bevorzugt bei einer Dauer von einer Stunde bis zu 2 Tagen. Dabei wird bei einer höheren Temperatur eine kürzere Verfahrensdauer bevorzugt.

Nach einer weiteren Verfahrensvariante wird der Hydrierkatalysator zusätzlich zum Strippen mit einem bevorzugt unpolaren organischen Lösungsmittel oder Lösungsmittelgemisch abgespült. Hierfür ist jedes Lösungsmittel oder Lösungsmittelgemisch geeignet, das die kohlenstoffhaltigen Ablagerungen auf dem Hydrierkatalysator zumindest teilweise löst. Besonders geeignet sind Kohlenwasserstoffe, beispielsweise Cyclohexan oder ein Benzol/Toluol/Xylol-Schnitt.

Bevorzugt führt man das Abspülen bei einer Temperatur im Bereich von 20 bis 50°C, besonders bevorzugt bei Umgebungstemperatur, durch. Die Obergrenze für die Verfahrenstemperatur hängt dabei vom Siedepunkt des eingesetzten Lösungsmittels oder Lösungsmittelgemisches ab, und zwar soll sie diesen nicht überschreiten. Für das Abspülen ist in der Regel eine Verfahrensdauer von 15 min bis zu mehreren Tagen ausreichend.

Es ist möglich, die Hydrierung des Hydrierkatalysators in situ, in überstehendem Lösungsmittel und/oder in im Kreis gepumpten Lösungsmittel durchzuführen. Es ist jedoch auch möglich, den Hydrierkatalysator auszubauen, d.h. ihn ex situ abzuspülen, bevorzugt in überstehendem Lösungsmittel und/oder in im Kreis geführtem Lösungsmittel, bevorzugt mit zusätzlicher Gaseinleitung und/oder mit Ultraschall.

Besonders bevorzugt ist es, die Hydrierung in der Weise durchzuführen, dass man den Hydrierkatalysator zuerst abspült und anschließend strippt.

Wird der Hydrierkatalysator zum wiederholten Male regeneriert, so kann es vorteilhaft sein, nachdem man den Katalysator zwei oder mehrere Male durch Strippen oder durch Abspülen und Strippen wie vorstehend beschrieben behandelt hatte, durch oxidative Behandlung oder durch Kombination von Strippen oder Abspülen und Strippen und oxidative Behandlungen zu regenerieren. Dies wird dann erforderlich sein, wenn die Belegung mit kohlenstoffhaltigen Ablagerungen bereits weit fortgeschritten ist.

Das Verfahren ist geeignet zur Regenerierung von Hydrierkatalysatoren, die als sogenannte Dünnschichtkatalysatoren vorliegen. Dünnschichtkatalysatoren zeichnen sich durch eine Schichtdicke des Aktivmaterials im Bereich von etwa 0,01 µm bis 100 µm aus. Dünnschicht-Hydrierkatalysatoren sind beispielsweise in EP-A 0 412 415, EP-A 0 564 830 oder EP-A 0 965 384 beschrieben und werden durch Tränken (EP-A 0 412 415), Vakuumbedampfung (EP-A 0 564 830) oder Aufsputtern (EP-A 0 965 384) erhalten.

Der Dünnschicht- Hydrierkatalysator ist aus einer Aktivmasse gebildet, umfassend ein oder mehrere hydrieraktive Metalle. Bevorzugt ist Palladium, besonders bevorzugt mit Silber dotiertes Palladium. Der nicht poröse, metallische Träger liegt bevorzugt als Gewebe oder Gestrick vor.

Die Erfindung wird im Folgenden anhand von Beispielen näher erläutert.

Es wurden monolithische Dünnschicht-Hydrierkatalysatoren, im Folgenden abgekürzt als DSK bezeichnet, getestet, mit Palladium als Aktivmasse und Silber als Promotor auf einem Träger aus einem Edelstahlgestrick, die wie folgt erhalten wurden:

Ein 20 cm breites Metallgestrickband aus dem Werkstoff Nr. 1.4301 mit einem Drahtdurchmesser von 0,12 mm wurde in einem Muffelofen getempert. Nach dem Abkühlen auf Raumtemperatur wurde das derart vorbehandelte Gestrick aufgerollt.

Anschließend wurde mit einer Tränklösung aus Palladiumnitrat, Silbernitrat und destilliertem Wasser behandelt.

Das getränkte Metallgestrick wurde getrocknet und an der Luft calciniert.

Der so hergestellte DSK wurde in einem Verfahren zur selektiven Hydrierung von Hydro-Dehydro-Linalool (HDHL) zu Hydro-Linalool (H-LIN) eingesetzt, die nach folgender Reaktionsgleichung abläuft**:**

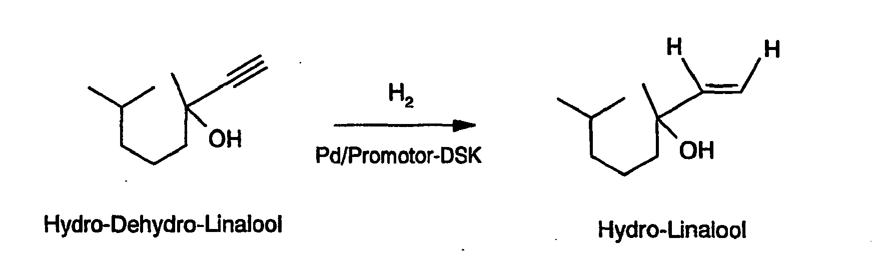

Die Reaktion wurde in einer Labor-Glasapparatur in Sumpffahrweise, in einer gepackten Blasensäule, kontinuierlich, isotherm durchgeführt. Der Katalysator bestand aus 2 Monolithen aus dem oben beschriebenen Metallgestrick, mit jeweils 200 mm Höhe und 300 mm Länge, gewickelt zu einem Enddurchmesser von 22 mm. Das Substratvolumen betrug 0,5 kg HDHL mit einem Reinheitsgrad von 99%.

Es wurden folgende Verfahrensparameter eingestellt:

| | |
|---|---|
| Druck: | 1,1 bar |
| Temperatur: | 80°C |
| Kreisreaktionsflüssigkeit: | 200 m³/m²/h |
| Kreisgas (Wasserstoff): | 200 m³/m²/h |

### Beispiele 1 bis 6 und Vergleichsbeispiele V1 bis V3:

### Einfluss von Regeneriertemperatur und -dauer auf die Katalysatoraktivität

Ein wie vorstehend beschriebener DSK wurde unter den vorstehend beschriebenen Verfahrensbedingungen getestet. Der DSK wurde durch Reduzierung mit Wasserstoff in die hydrieraktive Form übergeführt und anschließend, zwecks Simulierung der Desaktivierung, in Grünöl getränkt. Der DSK wurde zum Vergleich nach der klassischen, oxidativen Behandlungsmethode mit Dampf/Luft bzw. erfindungsgemäß mit Stickstoff regeneriert. Regeneriertemperatur und -dauer wurden variiert und die Katalysatoraktivität nach der Regenerierung über den relativen Umsatz in der oben beschriebenen Selektivhydrierung von HDHL gemessen, wobei der Umsatz mit frischem Katalysator als 100% bezeichnet wurde.

Die Versuchsergebnisse sind in der nachfolgenden Tabelle 1 zusammengefasst:

| | Behandlung | Temperatur [°C] | Dauer | Rel. Umsatz % |
|---|---|---|---|---|
| V1 | Dampf/Luft | 400 | 4h | 79 |
| V2 | Dampf/Luft | 400 | 24h | 63 |
| 1 | N₂ | 100 | 4h | 98 |
| 2 | N₂ | 150 | 4h | 89 |
| 3 | N₂ | 200 | 4h | 81 |
| V3 | N₂ | 400 | 4h | 52 |
| 4 | N₂ | 100 | 4h | 98 |
| 5 | N₂ | 100 | 24h | 84 |
| 6 | N₂ | 150 | 24h | 83 |

Die Ergebnisse zeigen, dass die Erhöhung von Temperatur sowie Dauer der Regenerierung negative Auswirkungen auf die Katalysatoraktivität nach der Regenerierung hat.

### Vergleichsbeispiele V4 und V5 und Beispiele 7 und 8:

### Einfluss der Regeneriermethode auf die Aktivität eines DSK, der in einem Betriebsreaktor zur Selektivhydrierung eines C₃-Schnittes eingesetzt worden war

Der nach der oben beschriebenen Herstellungsvorschrift erhaltende und entsprechend der DE-A 100 05 663 zu Packungen geformte DSK wurde in einen Betriebsreaktor zur Selektivhydrierung von Propin und/oder Propadien in C₃-Schnitten zu Propylen, das als "Verfahren B" in DE-A 19959064 bezeichnet ist, eingesetzt. Nach einer Laufzeit von einem Jahr wurde der Katalysator ausgebaut und als solcher, d.h. ohne Regenerierung (Vergleichsbeispiel V4), nach klassischer, oxidativer Regenerierung mit einem Dampf/Luftgemisch bei 400°C (Vergleichsbeispiel V5), nach erfindungsgemäßer Regenerierung durch Strippen mit einem Stickstoffstrom bei 100°C, 24 Stunden lang (Beispiel 7) sowie durch erfindungsgemäße Regenerierung mit kurzzeitigem Strippen mit Stickstoff im Reaktor und anschließendem Abspülen mit einem Benzol/Toluol/Xylol-Lösungsmittelgemisch, unter folgenden Verfahrensbedingungen:
Lösungmittelgemisch-Volumen/Katalysator-Volumen: 1,5 : 1,
Zeit: 6 Stunden
Temperatur: 25°C
(erfindungsgemäßes Beispiel 8) charakterisiert.

Für sämtliche Vergleichsbeispiele (V4, V5) und Beispiele (7, 8) wurden die folgenden Eigenschaften des DSK bestimmt:
Durchmesser der Primärpartikel in Nanometern mittels Transmissions-ElektronenMikroskopie,
Kohlenstoffgehalt an der Oberfläche des DSK in Atom-Prozenten (Atom-%), gemessen mittels Röntgen-Photoelektronen-Spektroskopie und
relativer Umsatz U(rel.) für die Selektivhydrierung von HDHL zu H-LIN, bezogen auf 100% Umsatz für den frischen DSK.

Die Ergebnisse sind in der nachstehenden Tabelle 2 zusammengefasst:

| | Regeneriermethode | Durchmesser [nm] | C-Gehalt [Atom-%] | U(rel.) [%] |
|---|---|---|---|---|
| V4 | - | 10 - 20 | 94 | 85 |
| 7 | N₂-Strippen | 10 - 20 | 85 | 94 |
| V5 | klassisch | 100 | 19 | 65 |
| 8 | Strippen, Abspülen | 10 - 20 | 78 | 94 |

Die Versuchsergebnisse zeigen, dass sich der Durchmesser der Primärpartikel durch die erfindungsgemäßen Regeneriermethoden nicht verändert. Der Kohlenstoffgehalt an der Katalysatoroberfläche nimmt zwar im Vergleich zur klassischen oxidativen Regenerierungsmethode nur unbedeutend ab, dies ist jedoch überraschenderweise für die Katalysatoraktivität, d.h. für die erreichbaren Umsätze, nicht ausschlaggebend. Mit der erfindungsgemäßen Regeneriermethode werden im Gegenteil Umsätze erreicht, die nur geringfügig unterhalb der Umsätze mit frischem Katalysator liegen.

## Patentansprüche

1. Verfahren zur Regenerierung eines Hydrierkatalysators, der als Dünnschichtkatalysator vorliegt, gebildet aus einer Aktivmasse umfassend ein oder mehrere hydrieraktive Metalle, die auf einem nicht porösen, metallischen Träger aufgebracht ist und der in einer Gasphasen-Selektivhydrierung von Acetylen aus einem C₂-Schnitt oder von Propin und/oder Propadien aus einem C₃-Schnitt eingesetzt worden war, durch Strippen mit einer Substanz oder einem Substanzgemisch, das unter Verfahrensbedingungen keine oxidierende Wirkung hat und in gasförmigem Aggregatzustand vorliegt, bei einer Temperatur im Bereich von 50 bis 300°C.

2. Verfahren nach Anspruch 1, **dadurch gekennzeichnet, dass** der metallische Träger als Gewebe oder Gestrick vorliegt.

3. Verfahren nach Anspruch 1 oder 2, **dadurch gekennzeichnet, dass** man die Substanz oder das Substanzgemisch, die (das) man zum Strippen einsetzt, aus der nachfolgenden Gruppe auswählt: Wasserstoff, Stickstoff, Argon, Kohlenwasserstoffe, bevorzugt gesättigte Kohlenwasserstoffe, besonders bevorzugt Methan.

4. Verfahren nach Anspruch 3, **dadurch gekennzeichnet, dass** man zum Strippen Stickstoff oder ein Gemisch aus Stickstoff und Wasserstoff einsetzt.

5. Verfahren nach einem der Ansprüche 1 bis 4, **dadurch gekennzeichnet, dass** man das Strippen bei einer Temperatur im Bereich von 70 bis 250°C, bevorzugt bei einer Temperatur im Bereich von 100 bis 150°C, durchführt.

6. Verfahren nach einem der Ansprüche 1 bis 5, **dadurch gekennzeichnet, dass** man zusätzlich zum Strippen den Hydrierkatalysator mit einem bevorzugt unpolaren organischen Lösungsmittel oder Lösungsmittelgemisch abspült.

7. Verfahren nach Anspruch 6, **dadurch gekennzeichnet, dass** man das Abspülen bei Umgebungstemperatur durchführt.

8. Verfahren nach Anspruch 6 oder 7, **dadurch gekennzeichnet, dass** man das Abspülen über eine Dauer von 15 Minuten bis zu mehreren Tagen durchführt.

9. Verfahren nach einem der Ansprüche 6 bis 8, **dadurch gekennzeichnet, dass** man das Verfahren in situ durchführt, bevorzugt in überstehendem Lösungsmittel und/oder in im Kreis gepumptem Lösungsmittel.

10. Verfahren nach einem der Ansprüche 6 bis 8, **dadurch gekennzeichnet, dass** man es ex situ durchführt, bevorzugt in überstehendem Lösungsmittel und/oder in im Kreis geführtem Lösungsmittel, bevorzugt mit zusätzlicher Gaseinperlung und/oder mit Ultraschall.

11. Verfahren nach einem der Ansprüche 6 bis 10, **dadurch gekennzeichnet, dass** man den Hydrierkatalysator zuerst abspült und anschließend strippt.

12. Verfahren zur wiederholten Regenerierung eines Hydrierkatalysators, **dadurch gekennzeichnet, dass** man den Hydrierkatalysator zwei oder mehrere Male durch Strippen nach einem der Ansprüche 1 bis 5 oder durch Abspülen und Strippen nach einem der Ansprüche 6 bis 11 und anschließend durch oxidative Behandlung oder eine Kombination von Strippen nach einem der Ansprüche 1 bis 5 oder Abspülen und Strippen nach einem der Ansprüche 6 bis 11 und oxidative Behandlung regeneriert.

13. Verfahren nach einem der Ansprüche 1 bis 12, **dadurch gekennzeichnet, dass** die Aktivmasse als hydrieraktives Metall Palladium, bevorzugt mit Silber dotiertes Palladium, umfasst.

## Claims

1. A process for regenerating a hydrogenation catalyst which is in the form of a thin-film catalyst, formed by an active composition comprising one or more hydrogenation-active metals which has been applied to a nonporous, metallic support and has been used in a gas-phase selective hydrogenation of acetylene in a C₂ fraction or of propyne and/or propadiene in a C₃ fraction, by stripping at from 50 to 300°C with a substance or a substance mixture which under the process conditions has no oxidizing action and is present in the gaseous state.

2. The process according to claim 1, wherein the metallic support is in the form of a woven mesh or knitted mesh.

3. The process according to claim 1 or 2, wherein the substance or substance mixture which is used for stripping is selected from the group consisting of hydrogen, nitrogen, argon, hydrocarbons, preferably saturated hydrocarbons, particularly preferably methane.

4. The process according to claim 3, wherein nitrogen or a mixture of nitrogen and hydrogen is used for stripping.

5. The process according to any of claims 1 to 4, wherein stripping is carried out at from 70 to 250°C, preferably from 100 to 150°C.

6. The process according to any of claims 1 to 5, wherein the hydrogenation catalyst is rinsed with a preferably nonpolar organic solvent or solvent mixture in addition to stripping.

7. The process according to claim 6, wherein rinsing is carried out at ambient temperature.

8. The process according to claim 6 or 7, wherein rinsing is carried out for a period of from 15 minutes to a plurality of days.

9. The process according to any of claims 6 to 8 carried out in situ, preferably in supernatant solvent and/or in solvent circulated by means of a pump.

10. The process according to any of claims 6 to 8 carried out ex situ, preferably in supernatant solvent and/or in solvent circulated by means of a pump, preferably with additional sparging with gas and/or with the aid of ultrasound.

11. The process according to any of claims 6 to 10, wherein the hydrogenation catalyst is firstly rinsed and subsequently stripped.

12. A process for the repeated regeneration of a hydrogenation catalyst, which comprises regenerating the hydrogenation catalyst two or more times by stripping according to any of claims 1 to 5 or by rinsing and stripping according to any of claims 6 to 11 and subsequently by oxidative treatment or a combination of stripping according to any of claims 1 to 5 or rinsing and stripping according to any of claims 6 to 11 and oxidative treatment.

13. The process according to any of claims 1 to 12, wherein the active composition comprises, as hydrogenation-active metal, palladium, preferably silver-doped palladium.

## Revendications

1. Procédé de régénération d'un catalyseur d'hydrogénation, qui se présente sous la forme d'un catalyseur en couche mince, formé d'une masse active comprenant un ou plusieurs métaux actifs pour l'hydrogénation, qui est appliquée sur un support métallique non poreux, et qui a été utilisé dans une hydrogénation sélective en phase gazeuse d'acétylène issu d'une coupe en C₂ ou de propyne et/ou de propadiène issu d'une coupe en C₃, par extraction avec une substance ou un mélange de substances, qui n'a pas d'action oxydante dans les conditions du procédé et qui se trouve à un état agrégé gazeux, à une température dans la plage allant de 50 à 300 °C.

2. Procédé selon la revendication 1, **caractérisé en ce que** le support métallique se présente sous la forme d'un tissu ou d'un tricot.

3. Procédé selon la revendication 1 ou 2, **caractérisé en ce que** la substance ou le mélange de substances utilisé pour l'extraction est choisi dans le groupe suivant : hydrogène, azote, argon, hydrocarbures, de préférence hydrocarbures saturés, de manière particulièrement préférée méthane.

4. Procédé selon la revendication 3, **caractérisé en ce que** de l'azote ou un mélange d'azote et d'hydrogène est utilisé pour l'extraction.

5. Procédé selon l'une quelconque des revendications 1 à 4, **caractérisé en ce que** l'extraction est réalisée à une température dans la plage allant de 70 à 250 °C, de préférence à une température dans la plage allant de 100 à 150 °C.

6. Procédé selon l'une quelconque des revendications 1 à 5, **caractérisé en ce qu'**en plus de l'extraction, le catalyseur d'hydrogénation est rincé avec un solvant organique de préférence apolaire ou un mélange de solvants.

7. Procédé selon la revendication 6, **caractérisé en ce que** le rinçage est réalisé à la température ambiante.

8. Procédé selon la revendication 6 ou 7, **caractérisé en ce que** le rinçage est réalisé pendant une durée allant de 15 minutes à plusieurs jours.

9. Procédé selon l'une quelconque des revendications 6 à 8, **caractérisé en ce que** le procédé est réalisé in situ, de préférence dans un solvant surnageant et/ou dans un solvant pompé dans un circuit.

10. Procédé selon l'une quelconque des revendications 6 à 8, **caractérisé en ce qu'**il est réalisé ex situ, de préférence dans un solvant surnageant et/ou dans un solvant pompé dans un circuit, de préférence avec barbotage supplémentaire de gaz et/ou avec ultrasons.

11. Procédé selon l'une quelconque des revendications 6 à 10, **caractérisé en ce que** le catalyseur d'hydrogénation est tout d'abord rincé, puis extrait.

12. Procédé de régénération répétée d'un catalyseur d'hydrogénation, **caractérisé en ce que** le catalyseur est régénéré deux fois ou plus par extraction selon l'une quelconque des revendications 1 à 5 ou par rinçage et extraction selon l'une quelconque des revendications 6 à 11, puis par traitement oxydatif, ou par combinaison d'une extraction selon l'une quelconque des revendications 1 à 5 ou d'un rinçage et d'une extraction selon l'une quelconque des revendications 6 à 11 et d'un traitement oxydatif.

13. Procédé selon l'une quelconque des revendications 1 à 12, **caractérisé en ce que** la masse active comprend du palladium, de préférence du palladium dopé avec de l'argent, en tant que métal actif pour l'hydrogénation.
